Europäisches Patentamt

European Patent Office

Office européen des brevets

(19)

(11) Veröffentlichungsnummer : **0 114 415**
**B1**

(12) **EUROPÄISCHE PATENTSCHRIFT**

(45) Veröffentlichungstag der Patentschrift :
04.03.87

(51) Int. Cl.⁴ : **B 62 B   3/10**

(21) Anmeldenummer : **83113256.8**

(22) Anmeldetag : **31.12.83**

(54) **Transportwagen, insbesondere Einkaufswagen.**

(30) Priorität : **19.01.83 DE 3301608**
**26.01.83 DE 8302005 U**

(43) Veröffentlichungstag der Anmeldung :
**01.08.84 Patentblatt 84/31**

(45) Bekanntmachung des Hinweises auf die Patenterteilung : **04.03.87 Patentblatt 87/10**

(84) Benannte Vertragsstaaten :
**AT BE CH DE FR GB IT LI NL SE**

(56) Entgegenhaltungen :
**DE-A- 1 930 056**
**FR-A- 2 102 020**
**GB-A- 1 368 793**
**US-A- 3 052 319**
**US-A- 4 067 591**

(73) Patentinhaber : **METRO SB-Handels AG**
**Industriestrasse 24**
**CH-6301 Zug (CH)**

(72) Erfinder : **Wanzl, Rudolf**
**Sonnenweg 8**
**D-8874 Leipheim (DE)**

(74) Vertreter : **Schöning, Hans-Werner, Dipl.-Ing. et al**
**RECHTSANWÄLTE Dr. Harmsen, Dr. Utescher Dipl.-**
**Chem Harmsen, Bartholatus Dr. Schaeffer, Dr. Fricke**
**PATENTANWÄLTE Dr. Siewers, Dipl.-Ing. Schöning**
**Adenauerallee 28**
**D-2000 Hamburg 1 (DE)**

## Beschreibung

Die Erfindung betrifft einen Transportwagen, insbesondere Einkraufswagen, mit wenigstens einer im Bereich des unteren Fahrrahmens angeordneten Ladefläche und mit einem von einem der beiden hinteren Eckbereiche des Fahrrahmens aus nach oben strebenden Rahmen, der eine über der unteren Ladefläche angeordnete obere Ladefläche trägt, die sich von Hand in ihrer Lage verändern läßt.

Transportwagen dieser Art finden Verwendung in Selbstbedienungsgeschäften. Man kann mit diesen Wagen bestimmte Kassentische so durchfahren, daß sich der Korb über der Warenablage der Kasse bewegt.

Die britische Patentschrift 1 368 793 beschreibt einen solchen Wagen. Dieser für bevorzugt übliches Einkaufsgut konzipierte Transportwagen besitzt neben einem kleineren starr angeordneten Warenkorb einen weiteren Warenkorb größeren Ausmaßes, der auf einer in Fahrtrichtung verlaufenden waagrecht angeordneten Strebe aufliegt und sich um eine waagrechte Achse zum Zwecke des Ineinanderschiebens mit gleichgearteten Wagen kreisbogenartig nach oben in eine Nichtgebrauchslage schwenken läßt. Im Bereich des unteren Fahrrahmens ist eine weitere Warenablage vorgesehen. Will man mit diesem Transportwagen auf der unteren Warenablage größere Gegenstände transportieren, die nicht in den oberen Korb passen, so steht, bedingt durch die in Fahrtrichtung über dem unteren Fahrrahmen verlaufende Strebe, nur eine gewisse Ladehöhe zur Verfügung und zwar auch dann, wenn der obere größere Korb nach oben geklappt ist, wobei zu befürchten ist, daß der nach oben geklappte Korb sich im Blickfeld der den Wagen schiebenden Person befindet und somit ein Lenken und Bewegen des Transportwagens unnötig erschwert. Einen solchen Transportwagen in Cash-and-carry-Märkten verwenden zu wollen, in denen gewöhnlich relativ große Warenpakete, Warengebinde oder überhaupt größere Gebrauchsgegenstände transportiert werden, stieße von der Belastbarkeit des Wagens und des zur Verfügung stehenden Ladebereiches her rasch auf Grenzen. Natürlich könnte man für diese Zwecke die üblichen stabiler gebauten Transportwagen verwenden, die eine auf dem unteren Fahrrahmen angeordnete Ladefläche besitzen, am rückwärtigen Ende beidseitig nach oben strebende Rahmenteile aufweisen, welche durch einen Griff miteinander verbunden sind und die eine Ablageplatte oder einen flachen Korb tragen, die bzw. der sich zwischen die beiden Rahmenteile in platzsparender Weise verschwenken läßt. Durch diese Weise könnte man schwere und relativ hohe, über die Höhe von Ablageplatte oder Korb hinausragende Gegenstände transportieren. Die Forderung jedoch, jene eingangs erwähnten Kassentische so befahren zu können, daß sich die obere Ablageplatte oder der obere Korb über der Warenablage bewegt, ist mit diesen Transportwagen nicht erfüllbar.

Die Aufgabe der Erfindung besteht deshalb darin, einen Transportwagen der eingangs genannten Art in stabiler Weise so zu gestalten, daß er von der Belastbarkeit her auch in « Cash-and-carry-Märkten » einsetzbar ist und daß mit ihm Gegenstände einzeln oder im Stapel transportiert werden können, die einzeln oder zusammen höher sind, als der Abstand der unteren Ladefläche zur oberen Ladefläche und daß eine Beeinträchtigung des Blickfeldes der den Transportwagen schiebenden Person auch dann ausgeschlossen ist, wenn sich die obere Ladefläche in einer Verstaustellung befindet.

Die Aufgabe ist erfindungsgemäß dadurch gelöst, daß die Bewegbarkeit der oberen Ladefläche mittels Schlaufen schiebeführungsartig um eine waagrechte Achse erfolgt, wobei die waagrechte Achse entweder aus einem stabförmigen Teil, oder zwei auf Abstand gehaltenen Achsstücken besteht und ein Stabende bzw. ein Achsstück am Rahmen befestigt ist und das andere Stabende bzw. das zweite Achsstück von einer Strebe, die vom Rahmen aus zur gegenüberliegenden Fahrrahmenseite gerichtet ist, gehalten wird.

Der besondere Vorteil, wie auch das wesentliche Merkmal der Erfindung besteht darin, daß die am oberen Ende des Rahmens befestigte Strebe das Anbringen des als Achse vorgesehenen stabförmigen Teiles, bzw. das Befestigen eines zweiten Achsstückes ermöglicht, so daß die obere Ladefläche sowohl in horizontaler Gebrauchslage, als auch in nach unten geschwenkter Nichtgebrauchslage sicher gehalten werden kann, wobei die obere Ladefläche in letzterem Falle so weit nach unter geschwenkt ist, daß sie sich nicht im unmittelbaren Blickfeld eines den Transportwagen schiebenden durchschnittlich großen Erwachsenen befindet. Durch das Anordnen der Strebe kann auf den sonst üblichen zweiten Rahmen, der das Befahren der eingangs erwähnten Kassentische nicht zuließe, verzichtet werden. Weitere Einzelheiten der Erfindung, sowie deren Vorteile sind in der nachfolgenden Beschreibung aufgeführt.

Die Erfindung wird anhand einiger Ausführungsbeispiele näher erläutert. Es zeigt:

Figur 1 einen Transportwagen in räumlicher Darstellung;

Figur 2 ein Detail des Transportwagens in Seitenansicht;

Figur 3 ein Detail des Transportwagens, bei dem die Achse durch zwei Achsstücke gebildet ist;

Figur 4 die obere Ladefläche in Form eines Korbes mit innenliegenden Schlaufen:

Figur 5 einen Schnitt durch eine Führung der oberen Ladefläche und

Figur 6 und 7 eine Ausgestaltung der Erfindung.

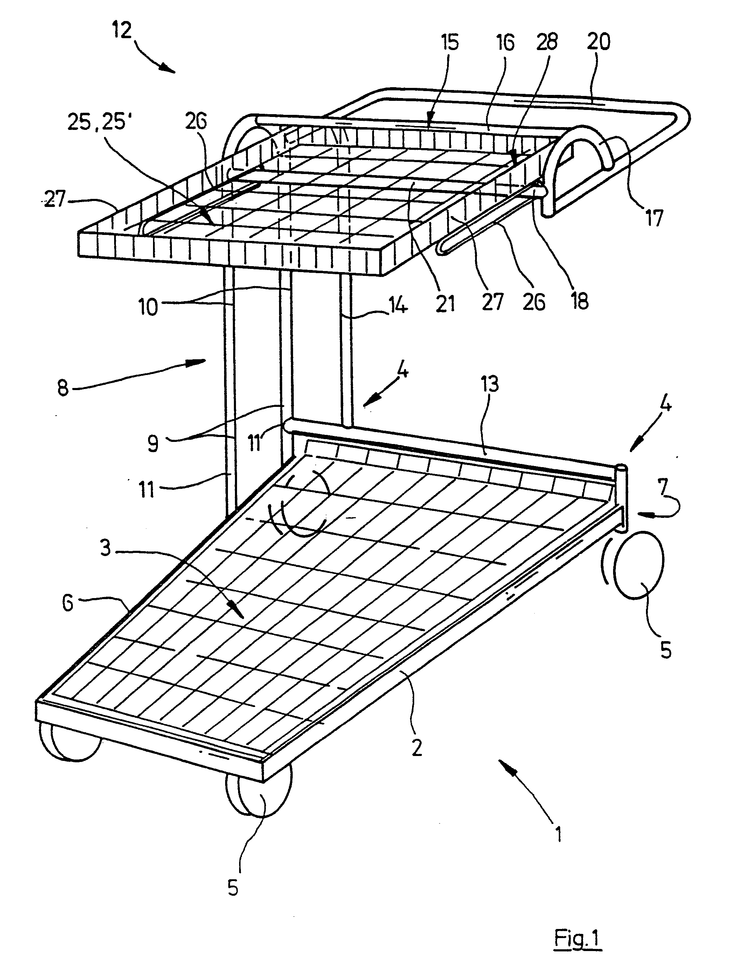

Der in Fig. 1 gezeigte Transportwagen 1 weist einen mit vier Rollen 5 ausgestatteten unteren Fahrrahmen 2 auf, der in bekannter Weise wenigstens eine, in der Regel aus Drahtgitter gefertigte untere Ladefläche 3 trägt. Der Fahrrahmen 2 kann natürlich in bekannter Weise so gestaltet sein, daß mehrere gleiche Fahrrahmen 2 und damit Transportwagen 1 platzsparend ineinander geschoben werden können. Es ist jedoch auch denkbar, die Fahrrahmen 2 nicht ineinanderschiebbar auszubilden. Von einem der beiden hinteren Eckbereiche 4 strebt ein Rahmen 8 senkrecht nach oben, wobei der Rahmen 8 im Beispiel aus einem Rohrbügel 9, der mit seinen Schenkelenden 11 an einer Seitenwand 6 des unteren Fahrrahmens 2 befestigt ist und einer Stütze 14, die auf einer Querverbindung 13 ruht, welche die rückwärtige Begrenzung des Fahrrahmens bildet, besteht. Die Querverbindung 13 verläuft vom hinteren der beiden Schenkel zum anderen hinteren Ende 7 des unteren Fahrrahmens 2, wo sie eine Stütze für die dort vorgesehene Rolle 5 bildet. Am oberen Bereich 12 des Rahmens 8 ist eine Strebe 15 befestigt, die vom Rahmen 8 zur gegenüberliegenden Fahrrahmenseite gerichtet ist. Die Strebe 15 besteht aus wenigstens einem Rohr 16, das mit seinem einen Ende mit dem Rohrbügel 9 verschweißt ist und an seinem anderen Ende ein Achsbefestigungsstück 17, beispielsweise einen Rohrkrümmer aufweist, an dem der Handgriff 20 mit einem Ende verbunden ist, während das andere Ende des Handgriffes am Rohrbügel 9 befestigt ist. Die Stütze 14 ist mit ihrem oberen Ende mit der Strebe 15 verbunden. Quer zur Fahrtrichtung ist eine Achse 18 angeordnet, welche die obere Ladefläche 25, die platten- oder korbförmig ausgebildet sein kann, tragen hilft. Die Achse 18 ist durch ein stabförmiges Teil 21 gebildet, das z. B. ein Rohr sein kann, welches mit einem Ende mit dem Rohrbügel 9 und mit seinem anderen Ende mit dem Achsbefestigungsstück 17 verbunden ist. Das stabförmige Teil 21 kann ebenfalls zur Strebe 15 gerechnet werden. Rohrbügel 9 und Stütze 14 sind, betrachtet man sie von oben, so angeordnet, daß die Schenkel 10 des Rohrbügels 9 und die Stütze 14 bevorzugt rechtwinklig zueinander angeordnet sind. Diese Anordnung läßt ein großes Widerstandsmoment entstehen, was die Belastbarkeit der oberen Ladefläche 25 erhöhen hilft, zumal bei der praktischen Ausführung des Transportwagens die obere Ladefläche 25 mindestens 800 mm über der unteren Ladefläche 3 angeordnet ist. Die obere Ladefläche 25 weist unten an beiden Längsseiten 27 je eine in Fahrtrichtung gerichtete Führung in Form einer Schlaufe 26 auf, durch welche die Achse 18 geführt ist. Die in der Zeichnung durch einen Korb 25' dargestellte Ladefläche 25 stützt sich, wie gezeigt, in Gebrauchslage über die Schlaufen 26 an der Achse 18 und über einen Teil seiner oberen Begrenzung 28 am Rohr 16 der Strebe 15 ab.

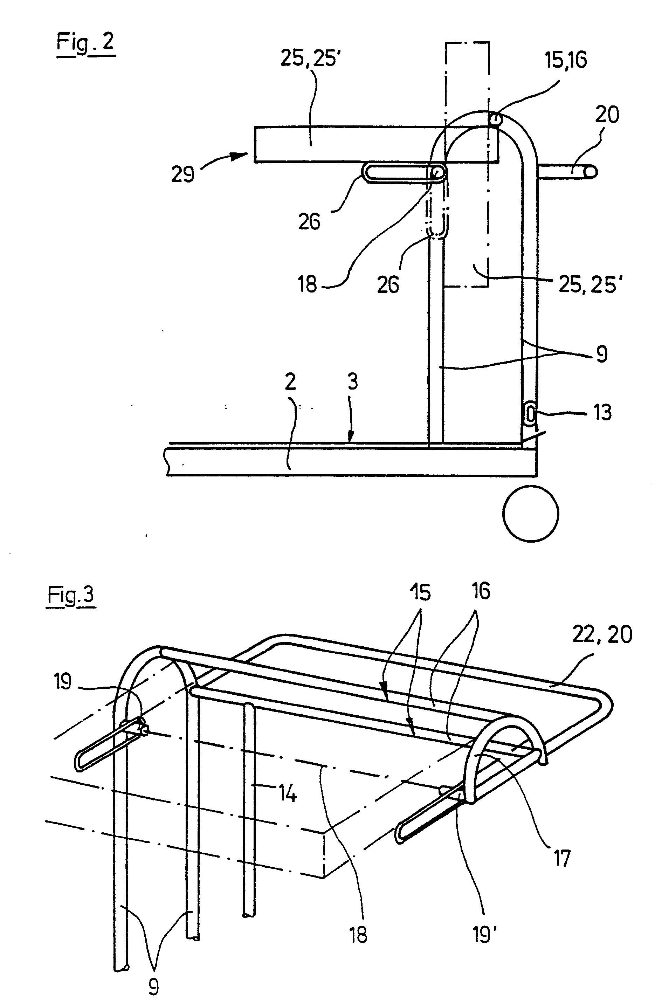

Letzteres wird auch in Fig. 2 deutlich dargestellt. Man erkennt ausschnittweise den unteren Fahrrahmen 2, dann den nach oben strebenden Röhrbügel 9, die Querverbindung 13, sowie einen Teil der Strebe 15, den Handgriff 20 und die Achse 18. Der die obere Ladefläche 25 bildende Korb 25' stützt sich nach unten an der Achse 18 und nach oben am Rohr 16 ab. Der Korb 25' bleibt somit in seiner waagrechten Gebrauchslage fixiert, da der in der Zeichnung links der Achse 18 liegende Abschnitt des Korbes 25' schwerer ist, als der rechts der Achse 18 befindliche. Will man nun die untere Ladefläche 3 mit einem oder mehreren Gegenständen beladen, die über die obere Ladefläche 25 nach oben hinaus ragen, so muß die obere Ladefläche 25 mit ihrem in Fahrtrichtung weisenden Ende 29 angehoben und um die Achse 18 entlang der Schlaufen schiebeführungsartig nach unten geschwenkt werden, bis sie jene nach unten weisende Nichtgebrauchslage einnimmt, wie sie in der Zeichnung strichpunktiert dargestellt ist. Die obere Ladefläche 25 hängt dann mit ihren Schlaufen 26 an der Achse 18. In der Zeichnung erkennt man, daß die Strebe 15 und die Achse 18 vorteilhafterweise nicht nach vorne über den Rohrbügel 9 hinausragen, was einen größtmöglichen Ladebereich bietet.

In Fig. 3 ist die Achse 18 durch zwei Achsstücke 19, 19' gebildet. Das erste Achsstück 19 ist am Rohrbügel 9 angeschweißt, während sich das gegenüberliegende Achsstück 19' in einer dem Fachmann bekannten lösbaren Weise spiegelbildlich am Achsbefestigungsstück 17 befindet. Die Strebe 15 ist in diesem Falle aus zwei unterschiedlich hoch angeordneten, geraden Rohren 16 und aus dem Achsbefestigungsstück 17 gebildet. Als U-förmiges Rohr 22 schließt sich der Handgriff 20 mit einem Ende am Achsbefestigungsstück 17 und mit dem anderen Ende am Achsbefestigungsstück 17 und mit dem anderen Ende am Rohrbügel 9 an. Die Stütze 14 ist am hinteren der beiden Rohre 16 angeschweißt.

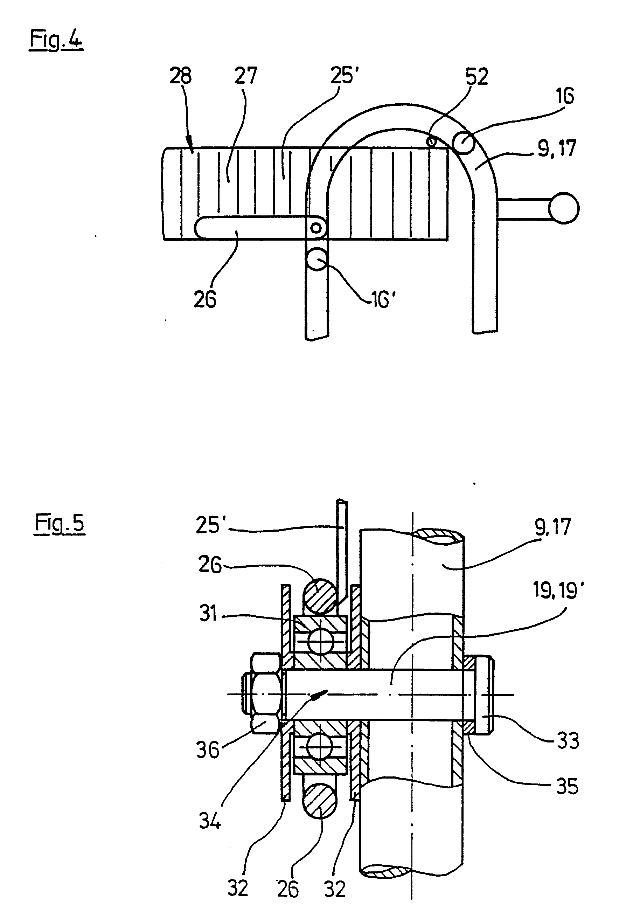

Bei dem in Fig. 4 gezeigten Ausführungsbeispiel sind die Schlaufen 26 innerhalb der Korbseitenwände 27 angeordnet. Die Schlaufen 26 verlaufen mit ihren unteren Begrenzungen entlang der unteren Kanten der Korbseitenwände 27. Dadurch erhöht sich die Bauhöhe der Seitenwände 27 und damit auch das Korbvolumen im Gegensatz zur Ausführung nach Fig. 2. Der Korb 25' stützt sich mit den oberen Begrenzungen 28 seiner beiden Seitenwände 27 nach oben hin an zur jeweils gegenüberliegenden Seite des Transportwagens 1 gerichteten Anschlägen 52 ab, wobei je ein Anschlag 52 am Rohrbügel 9, als auch am Achsbefestigungsstück 17 vorgesehen ist. Die Anschläge 52 sind kurze Bolzen, die knapp über die Korbseitenwände 27 hinwegreichen. Natürlich kann sich auch eine plattenförmige obere Ladefläche 25 an den Anschlägen 52 abstützen. Das obere Rohr 16 liegt außerhalb des vom Korb 25' gebildeten Grundrisses. Dies bewirkt, daß die volle Zugriffsöffnung des Korbes 25' für das Be- und Entladen des Korbes 25' zur Verfügung steht.

Bei den bisher gezeigten Ausführungsbeispielen wird die Achse 18 durch ein Rohr, einen Stab oder durch Achsstücke 19, 19' gebildet, welche von den Schlaufen 26 umgriffen werden. Ab einer bestimmten Größe der Korbes 25' ist es jedoch ratsam, die Achsstücke 19, 19' beispielsweise mit kleinen Rollen 31, etwa in Form von Kugellagern zu versehen, auf denen die Schlaufen 26 aufliegen. Dies vermindert die Reibung und erleichtert das Schwenken des Korbes 25'. Die Achsstücke 19, 19' sind in diesem Beispiel am Rohrbügel 9 bzw. am Achsbefestigungsstück 17 angeschraubt. Die Achsstücke 19, 19' sind durch Schraubbolzen gebildet, die von außen her durch den Rohrbügel 9 bzw. durch das Achsbefestigungsstück 17 geführt sind. Zwischen dem Schraubenkopf 33 und dem Rohr 9, 17 ist eine einseitig, der Krümmung des Rohres 9, 17 angepaßte Scheibe 35 eingefügt, die sich beim Anschrauben an die Rohrkrümmung anschmiegt. Auf dem innen liegenden Abschnitt 34 der Achsstücke 19, 19' ist die Rolle 31 aufgesetzt und beidseitig von zwei Scheiben 32 begrenzt. Die Scheiben 32 sind im Durchmesser derart groß, daß die Schlaufen 26 der oberen Ladefläche 25, bzw. des Korbes 25' nicht seitlich von den Rollen 31 abrutschen können. Durch Aufschrauben je einer Mutter 36 wird jedes Achsstück 19, 19' am Rohrbügel 9 bzw. am Achsbefestigungsstück 17 gehalten. Es bleibt zu erwähnen, daß die Achsstücke 19, 19' natürlich auch dann in anschraubbarer Form vorgesehen werden können, wenn sie keine Rollen 31 tragen, also direkt von den Schlaufen 26 umgriffen werden.

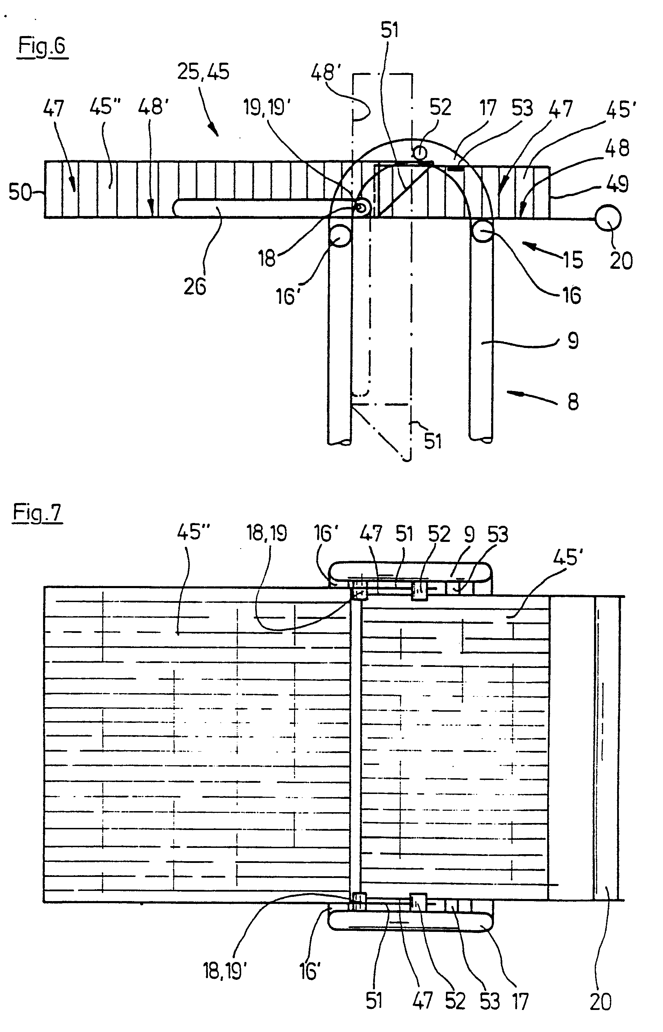

In einer Ausgestaltung der Erfindung zeigen Fig. 6 und Fig. 7 in schematischer Weise gemäß einer Seitenansicht und einer Draufsicht die obere Ladefläche 25 als zweigeteilten Korb 45. Der Korb 45 besteht dabei aus einem starren Abschnitt 45', der mit dem Rohrbügel 9, mit dem Achsbefestigungsstück 17 und mit dem hinteren Rohr 16, also mit dem Rahmen 8 und dem Steg 15 fest verbunden ist, während das vordere Rohr 16' außerhalb des Schwenkbereiches der Schlaufen 26, den Rohrbügel 9 und das Achsbefestigungsstück 17 unterhalb der Achse 18 miteinander verbindet. Der starre Abschnitt 45' besteht zweckmäßigerweise aus zwei Seitenwänden 47, einem Boden 48 und einer zum Handgriff 20 gerichteten Rückwand 49. An den starren Abschnitt 45' schließt sich in Fahrtrichtung orientiert der bewegliche Abschnitt 45" des Korbes 45 an. Auch er besteht aus zwei Seitenwänden 47, einem Boden 48' und einer in Fahrtrichtung angeordneten Vorderwand 50. In Fig. 6 erkennt man, daß der bewegliche Abschnitt 45" ebenfalls über Schlaufen 26 schiebebeweglich entlang einer waagrechten Achse 18 in Form von Achsstücken 19, 19' bewegbar ist. Der bewegliche Abschnitt 45" stützt sich nach oben mittels zweier Bügel 51 an je einem am Rohrbügel 9 bzw. am Achsbefestigungsstück 17 befindlichen Anschlag 52 ab. Man erkennt in Fig. 7, daß die Bügel 51 außerhalb der Seitenwände 47 des starren Abschnittes 45' geführt sind und daß zweckmäßigerweise der bewegliche Abschnitt 45" des Korbes 45 insgesamt breiter ausgebildet ist, als der starre Abschnitt 45'. Vom starren Abschnitt 45' ist je eine Nase 53 zum Rohrbügel 9 bzw. zum Achsbefestigungsstück 17 geführt und mit diesen verbunden. Der zweigeteilte Korb 45 besitzt seinen Vorteil darin, daß der bewegliche Abschnitt 45" leichter ist, als ein wie in den vorangegangenen Figuren gezeigter ganzer Korb 25'. Der Kraftaufwand für das Schwenken des beweglichen Abschnittes 45" aus oder in eine Verstaustellung, wie in Fig. 6 strichpunktiert gezeichnet, ist erheblich geringer. Darüberhinaus schließt der Boden 48' in heruntergeschwenkter Lage des beweglichen Abschnittes 45" die vordere Öffnung des offenen starren Abschnittes 45' ab, d. h., der Boden 48' bildet eine Wand, so daß der starre Abschnitt 45' auch dann noch kleinere Ware aufnehmen kann, wenn der bewegliche Abschnitt 45" zum Zwecke des Transports relativ hoher Ware oder Gegenstände heruntergeschwenkt werden muß. Aus Gründen einer deutlichen Darstellung ist der starre Abschnitt 45' niedriger als der bewegliche Abschnitt 45" gezeichnet.

## Patentansprüche

1. Transportwagen, insbesondere Einkaufswagen, mit wenigstens einer im Bereich des unteren Fahrrahmens (2) angeordneten Ladefläche (3) und mit einem von einem der beiden hinteren Eckbereiche (4) des Fahrrahmens (2) aus nach oben strebenden Rahmen (8), der eine über der unteren Ladefläche angeordnete obere Ladefläche (25) trägt, die sich von Hand in ihrer Lage verändern läßt, dadurch gekennzeichnet, daß die Bewegbarkeit der oberen Ladefläche (25) mittels Schlaufen (26) schiebeführungsartig um eine waagrechte Achse (18) erfolgt, wobei die Achse (18) entweder aus einem stabförmigen Teil (21), oder zwei auf Abstand gehaltenen Achsstücken (19, 19') besteht, und ein Stabende bzw. ein Achsstück (19) am Rahmen (8) befestigt ist und das andere Stabende bzw. das zweite Achsstück (19') von einer Strebe (15), die vom Rahmen (8) aus zur gegenüberliegenden Fahrrahmenseite gerichtet ist, gehalten wird.

2. Transportwagen, insbesondere Einkaufswagen, nach Anspruch 1, dadurch gekennzeichnet, daß der Rahmen (8) aus einem Rohrbügel (9) und einer Stütze (14) besteht.

3. Transportwagen, insbesondere Einkaufswagen, nach Anspruch 1 oder 2, dadurch gekennzeichnet, daß der Rahmen (8) und die Stütze (14) an der Umgrenzung des Fahrrahmens (2) befestigt sind.

4. Transportwagen, insbesondere Einkaufswagen, nach einem der Ansprüche 1 bis 3, dadurch gekennzeichnet, daß die Schenkel (10) des Rohrbügels (9) und die Stütze (14) in der Draufsicht gesehen zueinander winklig angeordnet sind.

5. Transportwagen, insbesondere Einkaufswagen, nach einem der Ansprüche 1 bis 4, dadurch gekennzeichnet, daß die Strebe (15) im oberen Bereich des Rahmens (8) an diesem (8) befestigt ist.

6. Transportwagen, insbesondere Einkaufswagen, nach einem der Ansprüche 1 bis 5, dadurch gekennzeichnet, daß die Strebe (15) wenigstens aus einem Rohr (16) und einem Achsbefestigungsstück (17) besteht.

7. Transportwagen, insbesondere Einkaufswagen, nach einem der Ansprüche 1 bis 6, dadurch gekennzeichnet, daß die Befestigungspunkte der Strebe (15) am Rahmen (8) unterschiedlich hoch angeordnet sind.

8. Transportwagen, insbesondere Einkaufswagen, nach einem der Ansprüche 1 bis 7, dadurch gekennzeichnet, daß die Strebe (15) nicht nach vorne über den Rohrbügel (9) hinaus ragt.

9. Transportwagen, insbesondere Einkaufswagen, nach einem der Ansprüche 1 bis 8, dadurch gekennzeichnet, daß die Stütze (14) auf der Querverbindung (13) aufsitzt und mit der Strebe (15) verbunden ist.

10. Transportwagen, insbesondere Einkaufswagen, nach einem der Ansprüche 1 bis 9, dadurch gekennzeichnet, daß die Achsstücke (19, 19') Rollen tragen, die von den Schlaufen (26) der oberen Ladefläche (25) umgriffen werden.

11. Transportwagen, insbesondere Einkaufswagen, nach einem der Ansprüche 1 bis 10, dadurch gekennzeichnet, daß sich die obere Ladefläche (25) in Gebrauchslage nach oben hin am Rohr (16) abstützt.

12. Transportwagen, insbesondere Einkaufswagen, nach einem der Ansprüche 1 bis 11, dadurch gekennzeichnet, daß sich bei einer korbartigen oberen Ladefläche (25) die Schlaufen (26) innerhalb einer jeden Seitenwand (27) befinden.

13. Transportwagen, insbesondere Einkaufswagen, nach einem der Ansprüche 1 bis 12, dadurch gekennzeichnet, daß das obere Rohr (16) außerhalb des Umrisses des Korbes (25') angeordnet ist.

14. Transportwagen, insbesondere Einkaufswagen, nach einem der Ansprüche 1 bis 13, dadurch gekennzeichnet, daß die Achsstücke (19, 19') lösbar befestigt sind.

15. Transportwagen, insbesondere Einkaufswagen, nach einem der Ansprüche 1 bis 14, dadurch gekennzeichnet, daß die obere Ladefläche (25) als zweigeteilter Korbe (45) mit einem starren Abschnitt (45') und einem beweglichen Abschnitt (45") gestaltet ist, wobei der bewegliche Abschnitt (45") um die waagrechte Achse (18) schiebeführungsartig bewegbar ist.

16. Transportwagen, insbesondere Einkaufswagen, nach einem der Ansprüche 1 bis 15, dadurch gekennzeichnet, daß der starre Abschnitt (45') fest mit dem Rahmen (8) und dem Steg (15) verbunden ist.

17. Transportwagen, insbesondere Einkaufswagen, nach einem der Ansprüche 1 bis 16, dadurch gekennzeichnet, daß der starre Abschnitt (45') nach vorne in Fahrtrichtung und der bewegliche Abschnitt (45") nach hinten, also entgegengesetzt zur Fahrtrichtung offen ist.

18. Transportwagen, insbesondere Einkaufswagen nach einem der Ansprüche 1 bis 17, dadurch gekennzeichnet, daß der nach vorne offene Bereich des starren Abschnittes (45') vom Boden (48') des beweglichen Abschnittes (45") verdeckt ist, wenn sich dieser (45") in nach unten geschwenkter Verstaustellung befindet.

19. Transportwagen, insbesondere Einkaufswagen, nach einem der Ansprüche 1 bis 18, dadurch gekennzeichnet, daß von oben gesehen der bewegliche Abschnitt (45") breiter ist, als der starre Abschnitt (45').

20. Transportwagen, insbesondere Einkaufswagen, nach einem der Ansprüche 1 bis 19, dadurch gekennzeichnet, daß das vordere Rohr (16') der Strebe (15) tiefer angeordnet ist, als die Achse (18).

21. Transportwagen, insbesondere Einkaufswagen, nach einem der Ansprüche 1 bis 20, dadurch gekennzeichnet, daß sich die obere Ladefläche (25) bzw. der bewegliche Abschnitt (45") in Gebrauchslage nach oben hin an je einem Anschlag (52) abstützt, wobei je ein Anschlag (52) am Rahmen (8) bzw. am Achsbefestigungsstück (17) angeordnet ist.

**Claims**

1. A transport cart, particularly a shopping trolley, having at least one loading area (3) disposed in the region of the lower wheel frame (2) and having a frame (8) which extends upwards from one of the two rear corner regions (4) of the wheel frame (2) and carries an upper loading area (25) which is disposed above the lower loading area and the position of which can be altered by hand, characterised in that the mobility of the upper loading area (25) is effected in the manner of a sliding guide about a horizontal spindle (18) by means of loops (26), the spindle (18) consisting either of a rod-shaped member (21) or of two spindle portions (19, 19') held spaced apart, and one end of the rod or one spindle portion (19) being secured to the frame (8) and the other end of the rod or the other spindle portion (19') being held by a strut (15) which is directed from the frame (8) towards the opposite side of the wheel frame.

2. A transport cart, particularly a shopping trolley, according to claim 1, characterised in that the frame (8) consists of a tubular loop (9) and an upright (14).

3. A transport cart, particularly a shopping trolley, according to claim 1 or 2, characterised in that the frame (8) and the upright (14) are secured to the boundary of the wheel frame (2).

4. A transport cart, particularly a shopping trolley, according to one of the claims 1 to 3, characterised in that the legs (10) of the tubular loop (9) and the upright (14) are disposed at an angle to one another, seen in plan view.

5. A transport cart, particularly a shopping trolley, according to one of the claims 1 to 4, characterised in that the strut (15) is secured to the frame (8) in the upper region of this (8).

6. A transport cart, particularly a shopping trolley, according to one of the claims 1 to 5, characterised in that the strut (15) consists at least of one tube (16) and one axial securing member (17).

7. A transport cart, particularly a shopping trolley, according to one of the claims 1 to 6, characterised in that the attachment points of the strut (15) to the frame (8) are disposed at different heights.

8. A transport cart, particularly a shopping trolley according to one of the claims 1 to 7, characterised in that the strut (15) does not project forwards beyond the tubular loop (9).

9. A transport cart, particularly a shopping trolley according to one of the claims 1 to 8, characterised in that the upright (14) is seated on the cross connection (13) and is connected to the strut (15).

10. A transport cart, particularly a shopping trolley according to one of the claims 1 to 9, characterised in that the spindle portions (19, 19') carry rollers which are engaged round by the loops (26) of the upper loading area (25).

11. A transport cart, particularly a shopping trolley, according to one of the claims 1 to 10, characterised in that, in the position of use, the upper loading area (25) is supported upwards on the tube (16).

12. A transport cart, particularly a shopping trolley, according to one of the claims 1 to 11, characterised in that in the case of a basket-like upper loading area (25), the loops (26) are inside each side wall (27).

13. A transport cart, particularly a shopping trolley, according to one of the claims 1 to 12, characterised in that the upper tube (16) is disposed outside the contour of the basket (25').

14. A transport cart, particularly a shopping trolley, according to one of the claims 1 to 13, characterised in that the spindle portions (19, 19') are detachably secured.

15. A transport cart, particularly a shopping trolley, according to one of the claims 1 to 14, characterised in that the upper loading area (25) is constructed in the form of a two-part basket (45) with a rigid portion (45') and a movable portion (45"), the movable portion (45") being movable about the horizontal spindle (18) in the manner of a sliding guide.

16. A transport cart, particularly a shopping trolley, according to one of the claims 1 to 15, characterised in that the rigid portion (45') is rigidly connected to the frame (8) and the bar (15).

17. A transport cart, particularly a shopping trolley, according to one of the claims 1 to 16, characterised in that the rigid portion (45') is open towards the front in the direction of travel and the movable portion (45") is open towards the rear that is to say opposite to the direction of travel.

18. A transport cart, particularly a shopping trolley, according to one of the claims 1 to 17, characterised in that the region of the rigid portion (45') which is open towards the front is hidden by the bottom (48') of the movable portion (45") when this (45') is pivoted downwards in the stowed-away position.

19. A transport cart, particularly a shopping trolley, according to one of the claims 1 to 18, characterised in that, seen from above, the movable portion (45") is wider than the rigid portion (45').

20. A transport cart, particularly a shopping trolley, according to one of the claims 1 to 19, characterised in that the front tube (16') of the strut (15) is disposed lower than the spindle (18).

21. A transport cart, particularly a shopping trolley, according to one of the claims 1 to 20, characterised in that, in the position of use, the upper loading area (25) or the movable portion (45") is supported in the upward direction against stops (52), one stop (52) being provided on the frame (8) and one on the axial securing member (17).

**Revendications**

1. Chariot de transport, notamment chariot d'achat, comportant au moins une surface de chargement (3) disposée dans une zone d'une partie inférieure de roulage (2) et un châssis (8), s'étendant vers le haut à partir d'un des deux coins arrière (4) du bâti de roulage (2) et qui porte une surface supérieure de chargement (25) placée au-dessus de la surface inférieure de chargement et dont la position peut être modifiée manuellement, caractérisé en ce qu'il est possible de déplacer la surface supérieure de chargement (25) au moyen de boucles (26), à la façon d'un guide à coulisse, autour d'un arbre horizontal (18), cet arbre (18) se composant soit d'une pièce en forme de barre (21) soit de deux parties d'arbre (19, 19') maintenues espacées l'un de l'autre, et une extrémité de barre ou bien une partie d'arbre (19) est fixée sur le châssis (8) tandis que la seconde partie d'arbre (19') est maintenue par une entretoise (15) qui est dirigée du châssis (8) vers le côté opposé du bâti de roulage.

2. Chariot de transport, notamment chariot d'achat, selon la revendication 1, caractérisé en ce que le châssis (8) se compose d'un étrier tubulaire (9) et d'un montant (14).

3. Chariot de transport, notamment chariot d'achat, selon la revendication 1 ou 2, caractérisé en ce que le châssis (8) et le montant (14) sont fixés sur la lisière du bâti de roulage (2).

4. Chariot de transport, notamment chariot d'achat, selon une des revendications 1 à 3, caractérisé en ce que les branches (10) de l'étrier tubulaire (9) et le montant (14) sont, en les considérant en vue en plan, disposés entre eux avec un certain angle.

5. Chariot de transport, notamment chariot d'achat, selon l'une des revendications 1 à 4, caractérisé en ce que l'entretoise (15) est fixée sur le châssis (8) dans une zone supérieure de ce dernier.

6. Chariot de transport, notamment chariot d'achat, selon l'une des revendications 1 à 5, caractérisé en ce que l'entretoise (15) se compose d'un tube (16) et d'une pièce de fixation d'arbre (17).

7. Chariot de transport, notamment chariot d'achat, selon l'une des revendications 1 à 6, caractérisé en ce que les points de fixation de l'entretoise (15) sur le châssis (8) sont placés à des hauteurs différentes.

8. Chariot de transport, notamment chariot d'achat, selon l'une des revendications 1 à 7, caractérisé en ce que l'entretoise (15) ne fait pas saillie vers l'avant au-dessus de l'étrier tubulaire (9).

9. Chariot de transport, notamment chariot d'achat, selon l'une des revendications 1 à 8, caractérisé en ce que le montant (14) s'appuie sur la traverse de liaison (13) et relié à l'entretoise (15).

10. Chariot de transport, notamment chariot d'achat, selon l'une des revendications 1 à 9, caractérisé en ce que les parties d'arbre (19, 19') portent des rouleaux qui sont entourés par des boucles (26) de la surface supérieure de chargement (25).

11. Chariot de transport, notamment chariot d'achat, selon l'une des revendications 1 à 10, caractérisé en ce que la surface supérieure de chargement 25 s'appuie, dans la position d'utilisation, vers le haut contre le tube (16).

12. Chariot de transport, notamment chariot d'achat, selon l'une des revendications 1 à 11, caractérisé en ce que, dans le cas d'une surface supérieure de chargement en forme de panier (25), les boucles (26) sont placées à l'intérieur de chacune des parois latérales (27).

13. Chariot de transport, notamment chariot d'achat, selon l'une des revendications 1 à 12, caractérisé en ce que le tube supérieur (16) est disposé à l'extérieur du contour du panier (25').

14. Chariot de transport, notamment chariot d'achat, selon l'une des revendications 1 à 13, caractérisé en ce que les parties d'arbre (19, 19') sont fixées de façon démontable.

15. Chariot de transport, notamment chariot d'achat, selon l'une des revendications 1 à 14, caractérisé en ce que la surface supérieure de chargement (25) est agencée sous forme d'un panier (45) en deux parties, comportant une partie fixe (45') et une partie mobile (45"), la partie mobile (45") étant déplaçable à la façon d'un guide à coulisse autour de l'arbre horizontal (18).

16. Chariot de transport, notamment chariot d'achat, selon l'une des revendications 1 à 15, caractérisé en ce que la partie fixe (45') est reliée rigidement avec le châssis (8) et avec l'entretoise (15).

17. Chariot de transport, notamment chariot d'achat, selon l'une des revendications 1 à 16, caractérisé en ce que la partie rigide (45') est ouverte vers l'avant dans le sens de marche tandis que la partie mobile (45") est ouverte vers l'arrière, c'est-à-dire dans une direction opposée au sens de marche.

18. Chariot de transport, notamment chariot d'achat, selon l'une des revendications 1 à 17, caractérisé en ce que la zone, ouverte vers l'avant, de la partie fixe (45') est recouverte par le fond (48') de la partie mobile (45") lorsque cette partie mobile (45") se trouve dans une position de rangement où elle a été amenée par pivotement vers le bas.

19. Chariot de transport, notamment chariot d'achat, selon l'une des revendications 1 à 18, caractérisé en ce que, en vue en plan, la partie mobile (45") est plus large que la partie (45').

20. Chariot de transport, notamment chariot d'achat, selon l'une des revendications 1 à 19, caractérisé en ce que le tube. avant (16') de l'entretoise (15) est placé plus bas que l'arbre (18).

21. Chariot de transport, notamment chariot d'achat, selon l'une des revendications 1 à 20, caractérisé en ce que la surface supérieure de chargement (25) ou la partie mobile (45") s'appuie, dans la position d'utilisation, vers le haut contre une butée respective (52), et une butée (52) étant prévue sur le châssis (8) et une autre sur la pièce de fixation d'arbre (17).

Fig. 2

25, 25'

15, 16

20

29

26

18

26

25, 25'

9

2

3

13

Fig. 3

15

16

22, 20

19

14

9

18

19'

17

2

Fig. 4

Fig. 5

Fig.6

Fig.7

4